Europäisches Patentamt

European Patent Office

Office européen des brevets

(11) Numéro de publication: **0 501 094 B1**

# FASCICULE DE BREVET EUROPEEN

(45) Date de publication du fascicule du brevet: **27.09.95**  (51) Int. Cl.6: **A23L 2/00**, A23F 5/40, A23F 3/30, A61K 7/46

(21) Numéro de dépôt: **91870036.0**

(22) Date de dépôt: **27.02.91**

Le dossier contient des informations techniques présentées postérieurement au dépôt de la demande et ne figurant pas dans le présent fascicule.

(54) **Procédé d'obtention d'un concentré liquide monophasique stérilisé à base d'huiles essentielles, destiné à la préparation de tisanes instantanées chaudes ou froides.**

(43) Date de publication de la demande:
**02.09.92 Bulletin 92/36**

(45) Mention de la délivrance du brevet:
**27.09.95 Bulletin 95/39**

(84) Etats contractants désignés:
**AT BE CH DE DK ES FR GB GR IT LI LU NL SE**

(56) Documents cités:
**EP-A- 0 274 348
FR-A- 2 623 102
GB-A- 1 118 019
US-A- 3 959 510
US-A- 4 835 002**

**DATABASE WPIL Derwent Publications Ltd.,London, GB; DATABASE WPIL, accession no. 84-160775, week 26; & IL- A - 58111 (JERUSALEM UNIVERSITY) 30.04.1984**

(73) Titulaire: **WORLD TRUST INVESTMENT S.A.
Boulevard Royal, 15
L-Luxembourg (LU)**

(72) Inventeur: **Larsen, Yvonne
Avenue Ricardo Soriano 45,
Apt. 39
E-29600 Marbella (ES)**

(74) Mandataire: **Vanderperre, Robert et al
Bureau Vander Haeghen,
Avenue Rogier 19/013
B-4000 Liège (BE)**

EP 0 501 094 B1

Rank Xerox (UK) Business Services
(3.10/3.09/3.3.3)

DATABASE FSTA International FoodInforma-tion Service, Berkshire, Reading, GB; DATA-BASE FSTA, accession no. 90-7390 , DN=90-06-N0010; C.D. VAUGHAN et al.: "Pre-dicting o/w emulsion stability by the requi-red HLB equation" & Journal of Dispersion Science and Technology 1990, vol. 11, no. 1, pages 83-91

FSTA DATABASE International FoodInforma-tion Service, Berkshire, Reading, GB; DA-TABSE FSTA, accession no. 89-3876, DN=89-03-T0050; J.D. DZIEZAK: "Emulsifiers: The interfacial key toemulsion stability" & Food Technology 1988, vol. 42, no. 10, pages 172,174-180,182,183,185,186

CHEMICAL ABSTRACTS, vol. 85, 22 novem-bre - 6décembre 1976, page 436, résumé no. 166482p, Columbus, Ohio, US; V. CIANCHINI et al.: "The hydrophile-lipophile balance (HLB) principle for predicting perfume oil solubilization" & Kosmetika (Zürich) 1974, vol. 2, no. 2, pages 31-33

DATABASE WPIL Derwent Publications Ltd.,London, GB; DATABASE WPIL, acces-sion no. 84-168181, week 27; & JP- A - 59091845 (S. NAKAYAMA) 26.05.1984

**Description**

Le présent brevet concerne un moyen d'élaborer un concentré liquide monophasique à base d'huiles essentielles, destiné à la préparation de tisanes instantanées chaudes ou froides ou de spécialités cosmétiques et pharmaceutiques par simple adjonction d'eau.

On connaît les tisanes obtenues à partir de végétaux traités selon les techniques suivantes :

- alcoolats : obtenus par distillation des principes volatils contenus dans la plante par l'alcool éthylique.
- alcoolature : obtenue par macération de plantes fraîches dans de l'alcool éthylique.
- décoction : obtenue à partir de fragments de végétaux frais ou secs jetés dans un solvant froid (eau le plus souvent) porté à ébullition.
- digestion : obtenue par macération à chaud des plantes dans un solvant sans ébullition.
- macération : obtenue par extraction à froid des principes actifs, dans un solvant.
- infusion : obtenue par exposition de plantes fraîches ou séchées à un solvant (eau la plupart du temps) à une température inférieure à l'ébullition.

Non seulement l'utilisation de plantes fraîches, séchées ou en sachets est fastidieuse, mais encore les plantes utilisées contiennent souvent de fortes doses de pesticides et leur contamination par des germes est supérieure aux normes en vigueur. De plus, le séchage des plantes entraîne inévitablement une perte d'arôme.

Les concentrés liquides fabriqués à ce jour sont obtenus le plus souvent par évaporation de jus de plantes ou d'une solution aqueuse à base de plantes préparée selon une des techniques exposées ci-dessus mais ce processus entraîne une perte importante d'arôme. Une autre technique utilise la dissolution des principes actifs des plantes dans de l'alcool mais elle implique la présence d'alcool dans la boisson.

La préparation décrite dans ce brevet permet de pallier ces inconvénients afin de fabriquer un produit aromatique stérilisé très concentré. Le procédé mis au point consiste à mettre en émulsion monophasique une huile essentielle.

L'huile essentielle représente l'essence des flaveurs des plantes et, de par ses propriétés propres, pH et composition, possède des qualités antimicrobiennes intrinsèques.

En revanche, les huiles essentielles, de par leur caractère lipophile, sont totalement insolubles dans l'eau. Actuellement les méthodes utilisées pour permettre lemploi d'huiles essentielles sont :

- la solubilisation des huiles essentielles dans un alcoolat mais la présence d'alcool est souvent un inconvénient majeur dans la préparation de boissons.
- la diffusion de gouttelettes d'huiles essentielles dans une suspension colloïdale qui a pour seul but d'opposer une résistance mécanique à la séparation des phases aqueuse et huileuse.
- la diffusion des huiles essentielles dans une solution contenant une gomme (type arabique ou xanthane) possédant des propriétés émulsifiantes.

Ces deux derniers procédés permettent de ralentir la séparation des phases mais en aucun cas de la stopper.

Une propriété des huiles est utilisée dans ce brevet pour émulsionner celles-ci de façon à obtenir un produit monophasique stable :

toute huile peut être caractérisée par son HLB (Hydrophilic Lipophilic Balance) qui représente un index de solubilité de l'huile considérée entre phase aqueuse et phase huileuse.

Une huile essentielle est un produit complexe constitué de plusieurs molécules (plus d'une trentaine ont été isolées dans l'huile de verveine). L'HLB d'une huile essentielle est en fait la somme des HLB de tous ses constituants.

Pour qu'une huile soit solubilisée de manière efficace dans une solution aqueuse, il est fondamental de l'additionner à une solution aqueuse d'émulsifiants dont la HLB est égale à celle de la ou des huiles utilisées.

La combinaison de deux émulsifiants au moins est nécessaire, l'utilisation d'un seul émulsifiant ne pouvant permettre de solubiliser une huile.

La première partie du procédé décrit ici consiste à déterminer l'HLB des huiles essentielles que l'on veut mettre en solution et à préparer une solution de même HLB, réalisée à l'aide d'émulsifiants autorisés pour l'usage alimentaire, tels que des sucroesters ou des esters citriques de monoglycérides, dans laquelle la ou les huiles essentielles sont solubilisées sous forte agitation.

L'équation de sédimentation :

$$V = \frac{2gr^2 \ (d_1 - d_2)}{9 \ n^2}$$

où

g      est la constante d'accélaration de la pesanteur

r      est le rayon des gouttelettes

$d_1$ et $d_2$      sont les densités des phases aqueuse et huileuse

n      est la viscosité de la phase aqueuse

montre que plusieurs facteurs jouent un rôle positif sur la stabilité de l'émulsion :

- des densités de même ordre de grandeur pour les phases aqueuse et huileuse,
- l'augmentation de la viscosité de la phase aqueuse,
- la diminution du diamètre moyen des particules d'huiles émulsionnées.

La deuxième partie du procédé décrit ici consiste à ajouter à la solution huileuse qui, au départ, a une densité inférieure à la phase aqueuse, une substance colloïdale s'incorporant dans les gouttelettes d'huile telle que la gomme damar ou toute autre substance augmentant la densité de la phase huileuse et ayant la même affinité pour les huiles. La quantité de gomme utilisée est calculée de manière à ce que la densité de la phase huileuse soit égale à celle de la phase aqueuse.

La troisième partie du procédé décrit ici consiste à augmenter la viscosité de la solution aqueuse à l'aide d'une substance épaississante telle que la pectine ou tout autre substance épaississante alimentaire. Il est à noter que, dans ce cas, l'utilisation d'une substance épaississante possédant des propriétés émulsifiantes n'est pas intéressante puisqu'elle modifierait l'HLB de la solution aqueuse préparée auparavant.

Des expériences pratiques montrent qu'une émulsion d'huile essentielle est stable à la condition que les gouttelettes d'huile aient un diamètre moyen inférieur à un micron environ et que l'histogramme de répartition des gouttelettes d'huile en fonction de leur taille soit centré au maximum sur la valeur d'un micron environ.

Or il apparaît que les gouttelettes d'huile présentes dans les émulsions réalisées à l'aide d'un appareil mélangeur à forte vitesse de rotation de type mixeur (hélice montée sur un axe rotatif) présentent un diamètre moyen d'environ 3 à 6 microns, soit une taille trop importante pour que ces émulsions soient stables.

La quatrième partie du procédé mis au point consiste à fractionner, après sa mise en émulsion, une huile essentielle en particules aussi petites que possible à l'aide d'un système exerçant une forte compression suivie d'une détente brusque (homogénéisation).

La cinquième partie du procédé décrit consiste à stériliser le concentré obtenu :
Bien que les huiles essentielles pures possèdent des propriétés bactéricides certaines, quoique variables selon l'espèce botanique dont elles sont extraites, les huiles diluées ou mises en émulsion ont des propriétés antibactériennes beaucoup moins puissantes.

Ceci est un inconvénient important pour la fabrication de concentrés pour boissons qui doivent être stérilisés.

Le procédé décrit permet de réaliser une émulsion stérile en utilisant trois techniques successives :

1. L'émulsion est réalisée à pH 3, pH auquel aucune pousse bactérienne pathogène n'est à craindre. Ce pH de 3 est obtenu naturellement lors de l'ajout de la pectine et évite l'adjonction de composés acidifiants.
2. L'émulsion est soumise à une homogénéisation et la forte compression/détente provoque l'éclatement des cellules présentes.
3. L'émulsion est ensuite soumise à une pasteurisation qui évite tout risque de pousse de moisissures ou de champignons qui pourraient se développer à pH acide.

La préparation d'un tel concentré présucré étant impossible avec du sucre, puisqu'il faudrait dépasser le seuil de solubilité du sucre dans l'eau, la solution est sucrée avec de l'aspartam ou tout autre édulcorant possédant un pouvoir sucrant beaucoup plus important que le saccharose.

Les huiles essentielles étant pour la plupart incolores et étant utilisées à de faibles concentrations, afin de donner aux tisanes une teinte colorée naturelle, nous avons utilisé des extraits végétaux concontrés possédant de forts pouvoirs colorants tels que la chlorophylle, les extraits de tagette ou de malt.

Dans ce brevet, les émulsions d'huiles essentielles sont réalisées en six étapes :

Etape n°1

Détermination de la Balance Hydro Lipidique (HLB: Hydrophilic Lipophilic Balance) de chaque huile ou mélange d'huiles essentielles utilisées et élaboration d'une solution aqueuse de deux ou plusieurs émulsifiants alimentaires en quantités suffisantes pour réaliser une solution aqueuse d'HLB identique.

Etape n°2

Incorporation de gomme damar dans la phase huileuse en quantité suffisante pour augmenter la densité de celle-ci afin qu'elle soit égale à celle de la phase aqueuse.

Etape n°3

Incorporation dé pectine dans la solution aqueuse afin d'augmenter la viscosité de celle-ci. La pectine est ajoutée à une température supérieure à 60°C et la présence de tensio-actifs permet de la dissoudre aisément alors qu'elle s'agglomère en grumeaux dans l'eau pure et à froid.

Etape n° 4

Mélange des ingrédients dans la solution aqueuse pectinée d'émulsifiants préparée lors des étapes n° 1 et 3, à l'aide d'un appareil mélangeur classique dans l'ordre suivant :
- Arômes naturels éventuels,
- Extraits végétaux colorants,
- Huile essentielle préparée lors de l'étape n° 2.

Etape n° 5

Passage du mélange ci-dessus dans un appareil homogénéisateur, ou tout système permettant d'obtenir des microparticules d'un diamètre moyen d'un micron.

Etape n° 6

Pasteurisation de la solution par exposition du mélange homogénéisé à une température supérieure à 85° C ou par tout autre moyen de stérilisation à froid (tel que la filtration, l'exposition aux micro-ondes ou l'électrobiose).

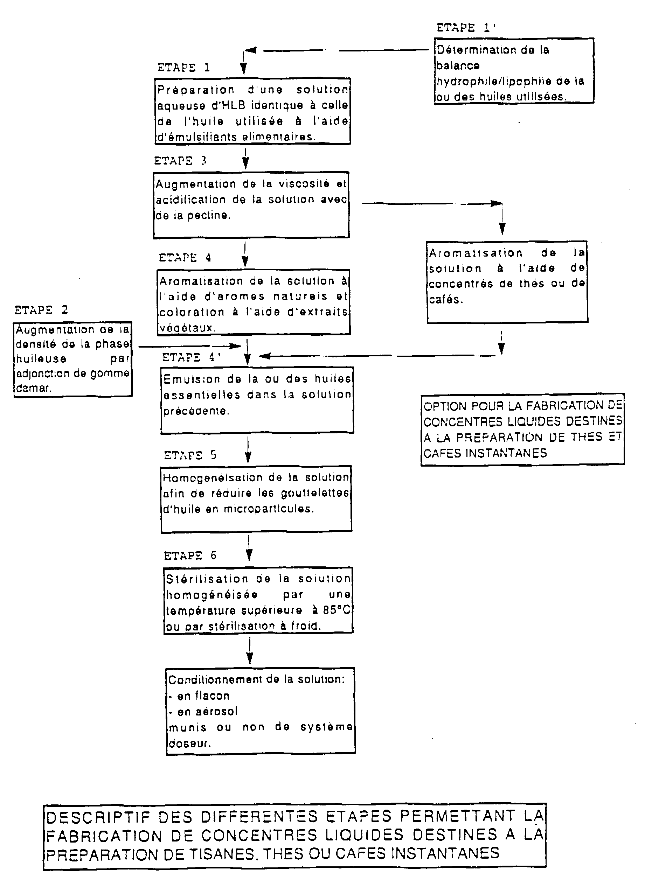

**Revendications**

1. Procédé d'obtention d'un concentré liquide monophasique à base d'huiles essentielles et destiné à la préparation de boissons instantanées chaudes ou froides par adjonction d'eau, caractérisé en ce que :
   - on détermine la Balance Hydro Lipidique (HLB : Hydrophilic Lipophilic Balance) de chaque huile ou mélange d'huiles essentielles utilisées et on élabore une solution aqueuse d'HLB identique à l'aide d'émulsifiants alimentaires ;
   - on augmente la densité de la phase huileuse en ajoutant une substance s'incorporant spécifiquement dans celle-ci, telle que de la gomme damar ;
   - on augmente la viscosité de la solution aqueuse à l'aide d'une substance épaississante alimentaire;
   - on ajoute les huiles essentielles dont la densité a été accrue, les arômes naturels éventuels et on émulsionne en agitant vigoureusement;
   - on homogénéise la solution obtenue afin de réduire le diamètre des particules lipidiques en la soumettant à une forte compression suivie d'une brusque détente ;
   - on stérilise la solution en l'exposant à une température supérieure à 85° C ou par tout autre moyen de stérilisation à froid (tel que la filtration, l'exposition aux micro-ondes ou l'électrobiose).

2. Procédé d'obtention d'un concentré liquide monophasique à base d'huiles essentielles selon la revendication 1, caractérisé en ce qu'il perfectionne la solubilisation des huiles essentielles sous forme de microparticules grâce à la détermination préalable de leur HLB et leur dilution dans une solution aqueuse de même HLB.

3. Procédé d'obtention d'un concentré liquide monophasique à base d'huiles essentielles selon la revendication 1, caractérisé en ce que les micelles d'huiles essentielles sont recouvertes d'un ou plusieurs agents émulsifiants alimentaires empêchant la coalescence, la floculation et la séparation de phase de l'émulsion réalisée.

4. Procédé d'obtention d'un concentré liquide monophasique à base d'huiles essentielles selon la revendication 1, caractérisé en ce que la solution est stérilisée par un triple mécanisme : acidification à pH 3 suivie d'une homogénéisation et d'une exposition à un traitement thermique supérieur à 85° C.

5. Procédé d'obtention d'un concentré liquide monophasique à base d'huiles essentielles selon la revendication 1, caractérisé en ce que la solution est soumise à un processus d'homogénéisation (compression/détente) afin de réduire la taille des particules lipidiques à un diamètre moyen de 1 micron.

6. Procédé d'obtention d'un concentré liquide monophasique à base d'huiles essentielles selon la revendication 1, caractérisé en ce que la solution est stabilisée par le fait que la densité de la phase huileuse est accrue à l'aide de gomme damar et que la viscosité de la phase aqueuse est accrue à l'aide d'un agent épaississant alimentaire tel que la pectine.

7. Procédé d'obtention d'un concentré liquide monophasique à base d'huiles essentielles selon la revendication 1, caractérisé en ce que :
   - on réalise une solution aqueuse de même HLB que la ou les huiles utilisées en mélangeant au moins deux sucroesters d'HLB différents dans la proportion adéquate adaptée à chaque huile ou mélange d'huile:
   - on ajoute, en mélangeant énergiquement, de la pectine dans la solution chauffée à 65° C, afin d'épaissir celle-ci ;

- on incorpore la ou les huiles essentielles préalablement additionnées de gomme damar ainsi que les arômes de fruits ou de plantes et on émulsionne à chaud à l'aide d'un appareil de type mélangeur rotatif à hélice ou rotor/stator ;
- on homogénéise la solution ainsi obtenue en la soumettant à une pression de 350 Bar et d'une détente à 20 Bar ;
- on pasteurise la solution homogénéisée dans un échangeur de chaleur à une température de 90°C et un temps de chambrage de vingt-cinq secondes.

8. Procédé d'obtention d'un concentré liquide monophasique à base d'huiles essentielles selon la revendication 1, caractérisé en ce qu'il permet de fabriquer des concentrés liquides destinés à la préparation de thés aromatisés instantanés par addition d'un concentré de thé.

9. Procédé d'obtention d'un concentré liquide monophasique à base d'huiles essentielles selon la revendication 1, caractérisé en ce qu'il permet de fabriquer des concentrés liquides destinés à la préparation de cafés aromatisés instantanés par addition d'un concentré de café.

10. Procédé d'obtention d'un concentré liquide monophasique à base d'huiles essentielles selon la revendication 1, caractérisé en ce que les concentrés liquides, destinés à la préparation de tisanes, thés ou cafés aromatisés instantanés peuvent être conditionnés :
    - en flacon en verre ou plastique ;
    - en aérosol en utilisant un gaz propulseur tel que le $N_2$, le $CO_2$ ou tout autre gaz alimentaire préservant la couche d'ozone qui offre l'avantage, outre la commodité d'utilisation, de protéger l'émulsion de l'oxydation.

    La solution peut être présentée en flacon ou en aérosol munis d'une pompe ou bouchon doseur permettant de délivrer de manière aisée et rapide une quantité reproductible de produit dans une tasse.

11. Procédé d'obtention d'un concentré liquide monophasique à base d'huiles essentielles selon la revendication 1, caractérisé en ce que les concentrés liquides, destinés à la préparation de tisanes, thés ou cafés aromatisés instantanés peuvent être conditionnés sous forme solide, sous forme de poudre ou de granulés. Dans ce cas l'émulsion est mélangée à un support tel que des maltodextrines ou toute autre substance servant à l'encapsulation de l'arôme et le mélange est soumis à une déshydratation.

12. Procédé d'obtention d'un concentré liquide monophasique à base d'huiles essentielles selon la revendication 1, caractérisé en ce qu'il peut être utilisé pour la préparation de tisanes instantanées chaudes ou froides par adjonction d'eau et que sa fabrication peut être réalisée à partir d'un mélange d'une ou plusieurs huiles essentielles avec un ou plusieurs arômes. Par exemple, préparation de tisanes instantanées aux huiles essentielles de :
    - verveine et menthe
    - verveine et orange
    - tilleul et menthe
    - verveine et citron
    - verveine et mandarine
    - camomille et orange
    - menthe verte
    - citron et arôme de cassis
    - pamplemousse et arôme de framboise
    - bergamote et arôme de pomme
    - citron et arôme de mûre
    - mandarine et arôme de noix de coco
    - verveine, tilleul, eucalyptus et menthe
    - réglisse, sauge, menthe et verveine.

13. Procédé d'obtention d'un concentré liquide monophasique à base d'huiles essentielles selon la revendication 1, caractérisé en ce que ce procédé peut être utilisé pour préparer des émulsions d'huiles essentielles utilisables pour réaliser des concentrés aromatiques pour le bain. Ces huiles pour le bain peuvent être présentées en :
    - flacon
    - aérosol
    - capsule molle gélatine ou toute autre capsule (en diminuant la concentration en eau de manière à se placer sous la concentration maximale en eau que peut supporter une capsule molle).

## Claims

1. Process for the production of a monophase liquid concentrate based on essential oils and intended for the preparation of hot or cold instant drinks by the addition of water, characterised in that:
    - the hydrophilic lipophilic balance (HLB) of each essential oil or mixture of essential oils used is determined and an aqueous solution having an identical HLB is produced using food emulsifiers;
    - the density of the oily phase is increased by adding a substance that becomes incorporated specifically in that oily phase, such as dammar resin;

- the viscosity of the aqueous solution is increased by means of a food thickening substance;
- the essential oils, of which the density has been increased, and any natural flavourings are added, and emulsification is effected with vigorous stirring;
- in order to reduce the diameter of the lipid particles, the solution obtained is homogenised by being subjected to strong compression followed by rapid expansion;
- the solution is sterilised by being subjected to a temperature higher than 85°C or by any other sterilising method at low temperature (such as filtration, exposure to microwaves, or electrobiosis).

2. Process for the production of a monophase liquid concentrate based on essential oils according to Claim 1, characterised in that it improves the solubilisation of essential oils in the form of microparticles owing to the previous determination of their HLB and their dilution in an aqueous solution having the same HLB.

3. Process for the production of a monophase liquid concentrate based on essential oils according to Claim 1, characterised in that the micelles of essential oils are coated with one or more food emulsifying agents, preventing the coalescence, flocculation and phase separation of the emulsion produced.

4. Process for the production of a monophase liquid concentrate based on essential oils according to Claim 1, characterised in that the solution is sterilised by a triple mechanism: acidification to pH 3, followed by homogenisation and subjection to a thermal treatment above 85°C.

5. Process for the production of a monophase liquid concentrate based on essential oils according to Claim 1, characterised in that the solution is subjected to a homogenisation process (compression/expansion) in order to reduce the size of the lipid particles to an average diameter of 1 micron.

6. Process for the production of a monophase liquid concentrate based on essential oils according to Claim 1, characterised in that the solution is stabilised owing to the fact that the density of the oily phase has been increased by means of dammar resin and that the viscosity of the aqueous phase has been increased by means of a food thickening agent, such as pectin.

7. Process for the production of a monophase liquid concentrate based on essential oils according to Claim 1, characterised in that:
- an aqueous solution having the same HLB as the oil(s) used is produced by mixing at least two sucro-esters having different HLB's in the appropriate proportion adapted to each oil or mixture of oils;
- with vigorous mixing, pectin is added to the solution heated to 65°C in order to thicken the latter;
- the essential oil(s), to which dammar resin has previously been added, and also fruit or plant flavourings are incorporated and emulsification is effected at elevated temperature using an apparatus of the type comprising a rotary mixer with propeller or a rotor/stator;
- the solution so obtained is homogenised by being subjected to a pressure of 350 bar and an expansion at 20 bar;
- the homogenised solution is pasteurised in a heat exchanger at a temperature of 90°C and with a residence time of twenty-five seconds.

8. Process for the production of a monophase liquid concentrate based on essential oils according to Claim 1, characterised in that it permits the production of liquid concentrates for the preparation of instant flavoured teas by the addition of a tea concentrate.

9. Process for the production of a monophase liquid concentrate based on essential oils according to Claim 1, characterised in that it permits the production of liquid concentrates for the preparation of instant flavoured coffees by the addition of a coffee concentrate.

10. Process for the production of a monophase liquid concentrate based on essential oils according to Claim 1, characterised in that the liquid concentrates for the preparation of instant flavoured herbal infusions, teas or coffees may be packaged:
- in a glass or plastics bottle;
- in an aerosol using a propellant gas such as $N_2$, $CO_2$ or any other gas used with foodstuffs that preserves the ozone layer, which offers the advantage, apart from ease of use, of protecting the emulsion from oxidation.

The solution may be presented in a bottle or aerosol provided with a metering pump or stopper enabling a reproducible quantity of the product to be readily and rapidly dispensed into a cup.

11. Process for the production of a monophase liquid concentrate based on essential oils according to Claim 1, characterised in that the liquid concentrates for the preparation of instant flavoured herbal infusions, teas or coffees may be packaged in solid form, powder form or granule form.

In that case the emulsion is mixed with a support, such as maltodextrins or any other substance used for encapsulating the flavouring, and the mixture is subjected to dehydration.

12. Process for the production of a monophase liquid concentrate based on essential oils according to Claim 1, characterised in that it may be used for the preparation of hot or cold instant herbal infusions by the addition of water and in that its production may be effected starting from a mixture of one or more essential oils and one or more flavourings. For example, preparation of instant herbal infusions containing essential oils of:
- verbena and mint
- verbena and orange
- lime and mint
- verbena and lemon
- verbena and mandarin
- camomile and orange
- spearmint
- lemon, and blackcurrant flavouring
- grapefruit, and raspberry flavouring
- bergamot, and apple flavouring
- lemon, and blackberry flavouring
- mandarin, and coconut flavouring
- verbena, lime, eucalyptus and mint
- liquorice, sage, mint and verbena.

13. Process for the production of a monophase liquid concentrate based on essential oils according to Claim 1, characterised in that the process can be used to prepare emulsions of essential oils that can be used to produce aromatic concentrates for the bath. These bath oils may be presented in:
- a bottle
- an aerosol
- a soft gelatin capsule or any other capsule (reducing the concentration of water to below the maximum concentration of water that a soft capsule can withstand).

## Patentansprüche

1. Verfahren zum Erhalt eines einphasigen flüssigen Konzentrats auf der Basis von etherischen Ölen und bestimmt zur Zubereitung von warmen oder kalten Instantgetränken durch Zugabe von Wasser, dadurch gekennzeichnet, daß
- man das hydrophile-lipophile Gleichgewicht (HLB: Hydrophilic Lipophilic Balance) eines jeden Öls oder jedes Gemischs von verwendeten etherischen Ölen bestimmt und man eine wäßrige Lösung mit identischem HLB mit Hilfe von Nahrungsmittel-Emulgatoren herstellt;
- man die Dichte der Ölphase erhöht, indem man eine Substanz hinzugibt, die sich speziell in dieser löst, wie Dammar-Gummi;
- man die Viskosität der wäßrigen Lösung mit Hilfe eines Nahrungsmittel-Verdickers erhöht;
- man die etherischen Öle, deren Dichte angehoben wurde, und eventuelle natürliche Aromen zufügt und man unter kräftigem Rühren emulgiert;
- man die erhaltene Lösung homogenisiert, um den Durchmesser der lipophilen Partikel zu verkleinern, indem man die Lösung einem starken Druck gefolgt von einer plötzlichen Druckminderung unterzieht;
- man die Lösung sterilisiert, indem man sie einer Temperatur oberhalb von 85°C aussetzt, oder durch jedes andere Mittel der Kaltsterilisation (wie die Filtration, das Bestrahlen mit Mikrowellen oder die Elektrobiose).

2. Verfahren zum Erhalt eines einphasigen flüssigen Konzentrats auf der Basis von etherischen Ölen gemäß Anspruch 1, dadurch gekennzeichnet, daß es das Solubilisieren der etherischen Öle in Form von Mikropartikeln dank der vorherigen Bestimmung ihres HLB und ihre Lösung in einer wäßrigen Lösung mit gleichem HLB perfektioniert.

3. Verfahren zum Erhalt eines einphasigen flüssigen Konzentrats auf der Basis von etherischen Ölen gemäß Anspruch 1, dadurch gekennzeichnet, daß die Mizellen der etherischen Öle mit einem oder mehreren Nahrungsmittel-Emulgatoren beschichtet sind, die die Koaleszenz, die Flockung und die Phasentrennung der hergestellten Emulsion verhindern.

4. Verfahren zum Erhalt eines einphasigen flüssigen Konzentrats auf der Basis von etherischen Ölen gemäß Anspruch 1, dadurch gekennzeichnet, daß die Lösung durch einen dreifachen Mechanismus sterilisiert wird: Ansäuerung bis pH 3, gefolgt von einer Homogenisierung und dem Unterziehen einer thermischen Behandlung oberhalb von 85 °C.

5.  Verfahren zum Erhalt eines einphasigen flüssigen Konzentrats auf der Basis von etherischen Ölen gemäß Anspruch 1, dadurch gekennzeichnet, daß die Lösung einem Homogenisierungs-Verfahren (Druck/Druckminderung) unterzogen wird, um die Größe der lipophilen Partikel auf einen mittleren Durchmesser von 1 Mikrometer zu verkleinern.

6.  Verfahren zum Erhalt eines einphasigen flüssigen Konzentrats auf der Basis von etherischen Ölen gemäß Anspruch 1, dadurch gekennzeichnet, daß die Lösung dadurch stabilisiert wird, daß die Dichte der Ölphase mit Hilfe von Dammar-Gummi erhöht wird, und daß die Viskosität der wäßrigen Phase mit Hilfe eines Nahrungsmittel-Verdickers wie Pektin erhöht wird.

7.  Verfahren zum Erhalt eines einphasigen flüssigen Konzentrats auf der Basis von etherischen Ölen gemäß Anspruch 1, dadurch gekennzeichnet, daß
    - man eine wäßrige Lösung mit gleichem HLB wie das des oder der benutzten Öle herstellt, indem man wenigstens zwei Zuckerester mit unterschiedlichem HLB in adäquatem Verhältnis, das jedem Öl oder Ölgemisch angepaßt ist, vermischt:
    - man fügt unter starkem Vermischen Pektin der auf 65 °C erwärmten Lösung zu, um diese zu verdicken;
    - man gibt das oder die mit Dammar-Gummi zuvor angereicherten etherischen Öle sowie die Frucht- oder Pflanzenaromen hinzu und man emulgiert im Warmen mit Hilfe eines Gerätes der Art eines Schrauben-Drehmischers oder Rotors/Stators;
    - man homogenisiert die so erhaltene Lösung, indem man sie einem Druck von 350 bar und einer Druckminderung von 20 bar unterzieht;
    - man pasteurisiert die homogenisierte Lösung in einem Wärmetauscher bei einer Temperatur von 90 °C und einer Einsinkzeit von fünfundzwanzig Sekunden.

8.  Verfahren zum Erhalt eines einphasigen flüssigen Konzentrats auf der Basis von etherischen Ölen gemäß Anspruch 1, dadurch gekennzeichnet, daß es ermöglicht, flüssige Konzentrate herzustellen, die zur Zubereitung von aromatisierten Instant-Tees durch Zugabe eines Tee-Konzentrats bestimmt sind.

9.  Verfahren zum Erhalt eines einphasigen flüssigen Konzentrats auf der Basis von etherischen Ölen gemäß Anspruch 1, dadurch gekennzeichnet, daß es ermöglicht, flüssige Konzentrate herzustellen, die zur Zubereitung von aromatisierten Instant-Kaffees durch Zugabe eines Kaffee-Konzentrats bestimmt sind.

10. Verfahren zum Erhalt eines einphasigen flüssigen Konzentrats auf der Basis von etherischen Ölen gemäß Anspruch 1, dadurch gekennzeichnet, daß die flüssigen Konzentrate, die zur Zubereitung von aromatisierten Instant-Kräutertees, Tees oder Kaffees bestimmt Sind, können
    - in Glas- oder Plastikflaschen abgepackt sein;
    - in Aerosol abgepackt sein, wobei man ein Teibgas wie $N_2$, $CO_2$ oder jedes ander Nahrungsmittel-Gas benutzt, das die Ozonschicht bewahrt, die, außer der Benutzungs-Annehmlichkeit, den Vorteil bietet, die Emulsion gegen die Oxidation zu schützen.

    Die Lösung kann in einer Flasche oder in Aerosol vorliegen, die mit einer Dosierungspumpe oder einem Dosierungskorken ausgestattet sind, der ermöglicht, in einfacher und schneller Weise eine reproduzierbare Menge des Produktes in eine Tasse zu füllen.

11. Verfahren zum Erhalt eines einphasigen flüssigen Konzentrats auf der Basis von etherischen Ölen gemäß Anspruch 1, dadurch gekennzeichnet, daß die flüssigen Konzentrate, die zur Zubereitung von aromatisierten Instant-Kräutertees, Instant-Tees oder Instant-Kaffees bestimmt sind, in fester Form, Pulverform oder Granulatform abgepackt sein können. In diesem Fall wird die Emulsion mit einer Trägersubstanz wie Maltose-Dextrine oder jeder anderen Substanz, die der Verkapselung des Aromas dient, vermischt und das Gemisch wird einer Dehydratisierung (Trocknung) unterzogen.

12. Verfahren zum Erhalt eines einphasigen flüssigen Konzentrats auf der Basis von etherischen Ölen gemäß Anspruch 1, dadurch gekennzeichnet, daß es zur Zubereitung von warmen oder kalten Instant-Kräutertees durch Zugabe von Wasser benutzt werden kann, und daß seine Herstellung ausgehend von einem Gemisch aus einem oder mehreren etherischen Ölen mit einem oder mehreren Aromen ausgeführt werden kann. Z.B. Zubereitung von Instant-Kräutertees aus etherischen Ölen mit:

- Eisenkraut und Minze
- Eisenkraut und Orange
- Linde und Minze
- Eisenkraut und Zitrone
- Eisenkraut und Mandarine
- Kamille und Orange
- grüne Minze
- Zitrone und Johannisbeeraroma
- Pampelmuse und Himbeeraroma
- Bergamotte und Apfelaroma
- Zitrone und Maulbeeraroma
- Mandarine und Kokosnuß-Aroma
- Eisenkraut, Linde, Eukalyptus und Minze
- Süßholz, Salbei, Minze und Eisenkraut.

13. Verfahren zum Erhalt eines einphasigen flüssigen Konzentrats auf der Basis von etherischen Ölen gemäß Anspruch 1, dadurch gekennzeichnet, daß dieses Verfahren benutzt werden kann, um Emulsionen aus etherischen Ölen herzustellen, die verwandt werden können, um aromatische Konzentrate für das Bad herzustellen. Diese Öle für das Bad können vorliegen in:

- einer Flasche
- Aerosol
- einer weichen Gelatinekapsel oder jeder anderen Kapsel (wobei die Wasserkonzentration derart verringert wird, daß sie unter der maximalen Wasserkonzentration liegt, die eine weiche Kapsel tragen kann).

ETAPE 1'

Détermination de la balance hydrophile/lipophile de la ou des huiles utilisées.

ETAPE 1

Préparation d'une solution aqueuse d'HLB identique à celle de l'huile utilisée à l'aide d'émulsifiants alimentaires.

ETAPE 3

Augmentation de la viscosité et acidification de la solution avec de la pectine.

ETAPE 4

Aromatisation de la solution à l'aide d'aromes naturels et coloration à l'aide d'extraits végétaux.

Aromatisation de la solution à l'aide de concentrés de thés ou de cafés.

ETAPE 2

Augmentation de la densité de la phase huileuse par adjonction de gomme damar.

ETAPE 4'

Emulsion de la ou des huiles essentielles dans la solution précédente.

OPTION POUR LA FABRICATION DE CONCENTRES LIQUIDES DESTINES A LA PREPARATION DE THES ET CAFES INSTANTANES

ETAPE 5

Homogénéisation de la solution afin de réduire les gouttelettes d'huile en microparticules.

ETAPE 6

Stérilisation de la solution homogénéisée par une température supérieure à 85°C ou par stérilisation à froid.

Conditionnement de la solution:
- en flacon
- en aérosol
munis ou non de système doseur.

DESCRIPTIF DES DIFFERENTES ETAPES PERMETTANT LA FABRICATION DE CONCENTRES LIQUIDES DESTINES A LA PREPARATION DE TISANES, THES OU CAFES INSTANTANES